# EUROPÄISCHE PATENTSCHRIFT

(11) **EP 2 443 352 B1**
(45) Veröffentlichungstag und Bekanntmachung des Hinweises auf die Patenterteilung: **25.01.2017**
(21) Anmeldenummer: 10722613.6
(22) Anmeldetag: 20.05.2010
(51) Int. Cl.: F16B 7/04

(54) **PROFILSTABVERBINDUNGSSYSTEM**
PROFILE BAR CONNECTION SYSTEM
SYSTÈME DE LIAISON DE BARRES PROFILÉES

(30) Priorität: 18.06.2009 DE 202009008687 U
(43) Veröffentlichungstag der Anmeldung: 25.04.2012
(73) Patentinhaber: Rixen, Wolfgang, 42699 Solingen (DE); Pies, Gerrit, 42699 Solingen (DE)
(72) Erfinder: Rixen, Wolfgang, 42699 Solingen (DE); Pies, Gerrit, 42699 Solingen (DE)
(74) Vertreter: Draudt, Axel Hermann Christian
(86) Internationale Anmeldenummer: PCT/EP2010/003109
(87) Internationale Veröffentlichungsnummer: WO 2010/145744

(56) Entgegenhaltungen:
- DE-A1- 2 400 747
- DE-A1- 19 855 928
- GB-A- 177 271
- US-A- 3 820 909

## Beschreibung

Die Erfindung betrifft ein Profilstabverbindungssystem zum Verbinden mindestens zweier in etwa senkrecht zueinander verlaufender erster und zweiter Profilstäbe, mit ersten und zweiten Halbschellen, die an ihren ersten Enden und zweiten Enden miteinander verbindbar sind, einer Klemmvorrichtung, die mit den ersten und zweiten Halbschellen, die um den ersten Profilstab gelegt sind, verbindbar ist und den zweiten Profilstab hält, wobei die ersten Enden formschlüssig und die zweiten Enden mittels der Klemmvorrichtung miteinander verbunden sind .

Ein derartiges Profilstabverbindungssystem ist beispielsweise aus der US 3,820,909 A (D1) bekannt.

Die Druckschrift D1 offenbart einzelne Elemente zur Errichtung von Zäunen. Insbesondere offenbart sie eine Verbindungsvorrichtung zur Verbindung von aus runden Elementen geformten zäunen. Mit Hilfe eines Klemmelements ist es dabei möglich, an einem senkrechten Pfosten ein quer dazu angeordnetes Zaunteil anzuschließen. Dies geschieht mit zwei Schalenteilen. Diese Schalenteile sind so geformt, daas an einem Ende, nämlich dem Pfostenende, die beiden Schalen sich formschlüssig zusammenfügen, während an dem anderen Ende eine lange Schraube durch die sich an die Querstange anpassenden Schalenenden mittels einer gesamt durchstackbaren Schraube fixiert ist.

Dieses bekannte Profilstabverbindungssystem ist allerdings hochgradig kompliziert aufgebaut und benötigt daher mehrere Arbeitsschritte, um diese Klemmverbindungen an ordentlicher Stelle und passgerecht sicherzustellen. Ferner kann nur eine Querstrebe damit an dem Pfosten angeschlossen werden.

Der Erfindung liegt daher die Aufgabe zugrunde, ein Profilstabverbindungssystem der eingangs genannten Art anzugeben, dessen Montage wesentlich einfacher und auch sicherer durchgeführt werden kann und gleichzeitig auch mehr Verwendungsmöglichkeiten zur Verfügung stellt.

Diese Aufgabe wird bei einem profilstabverbindungssystem der eingangs genannten Art erfindungsgemäß dadurch gelöst, dass die zweiten Enden im zusammengefügten Zustand eine erste hinterschnittene Ausformung bilden. Diese spezielle mit Hinterschnitten versehene Ausformung ist für die Klemmverbindung von vorteil. Damit die ersten Enden der Halbschalen auch einer Befestigung eines zweiten Profilstabes dienen, ist gemäß einer Weiterbildung der Erfindung vorgesehen, dass die ersten Enden im zusammengefügten Zustand eine zweite hinterschnittene Ausformung bilden.

Der Kern der Erfindung besteht darin, gegenüber dem Stand der Technik die Verbindungsenden der beiden Halbschellen für die Befestigung mindestens eines zweiten Profilstabes auszunutzen. Es ist daher nicht mehr notwendig, zunächst die beiden Halbschellen mittels Schraubverbindungen an dem Profilstab zu befestigen und dann anschließend die Klemmvorrichtung an eine extra ausgeformte Halbschelle anzubringen.

Gemäß einer Weiterbildung der Erfindung ist es vorgesehen, dass die Klemmvorrichtung aus ersten und zweiten Halbschalen besteht und entsprechende Aufnahmen zum kraftschlüssigen bzw. form- und kraftschlüssigen Ergreifen der zusammengefügten zweiten Enden aufweisen.

Besonders vorteilhaft ist es, wenn die zusammengefügten ersten und zweiten Halbschellen dritte und vierte hinterschnittene Ausformungen aufweisen, wobei alle vier Ausformungen in regelmäßigen Abständen angeordnet sind. Dadurch ist es möglich, den ersten Profilstab entweder als Eckstab, in einem Verbund stehenden Stab oder aber auch als Kreuzungspunkt zu verwenden.

Es gibt sicherlich viele Arten und Formen, die entsprechenden Enden miteinander zu verbinden. Als besonders einfach hat es sich allerdings erwiesen, wenn das zweite Ende der ersten Halbschelle einen zweiten hinterschnittenen Vorsprung aufweist, der in eine in Richtung des zweiten Endes der zweiten Halbschelle verlaufende Zunge übergeht, die das zweite Ende der zweiten Halbschelle untergreift.

Sollte es sich bei dem ersten Profilstab um einen zumindest einen kreisförmigen Außenumfang bildenden Profilstab handeln, ist es von Vorteil, wenn die ersten und zweiten Halbschellen jeweils einen Umschlingungswinkel aufweisen, der größer als 180° ist. Dadurch ist es sichergestellt, dass die an der entsprechenden gewünschten Position angelegten Halbschellen schon vor der Befestigung des Klemmstücks selbsthaltend sind.

Gleiches gilt allerdings auch für mehreckige Profile nämlich dadurch, dass die ersten und zweiten Halbschellen jeweils eine Umschlingungslänge aufweisen, die größer ist als der halbe Außenumfang des Profilstabs.

Wenn die zum ersten Profilstab weisende Stirnseite der Klemmvorrichtung im Anschluss an die Hinterschnitte der zweiten Enden der beiden Halbschellen anliegt und somit die Hinterschnitte schließt, dann ist nicht nur eine Lagesicherung der Schellenhälften gegeben, sondern auch noch die Verbindungsstelle gegen Eindringen von Schmutz gesichert.

Es gibt eine Vielzahl von Herstellungsmöglichkeiten für diese Halbschellen, als besonders vorteilhaft hat es sich aber herausgestellt, wenn die Halbschellen stranggepresste Profile sind.

Weitere Vorteile und Merkmale der Erfindung ergeben sich aus der folgenden Beschreibung mehrerer Ausführungsbeispiele sowie aus den Figuren, auf die Bezug genommen wird. Es zeigen:
- Figl.:: eine Perspektivdarstellung eines befestigten Profilstabverbindungssystems;
- Fig.2:: eine geschnittene Draufsicht des Profilstabverbindungssystems gemäß Fig. 1;
- Fig.3:: eine perspektivische Explosionsdarstellung des Profilstabverbindungssystems gemäß Fig. 1;
- Fig.4:: eine Draufsicht auf die Darstellung des Profilstabverbindungssystems gemäß Fig.3;
- Fig.5:: eine Perspektivdarstellung mit zwei senkrecht zueinander angeschlossenen Profilstäben;
- Fig.6.:: eine Perspektivdarstellung mit drei an dem ersten Profilstab angeschlossenen Profilstabverbindungssystems; und
- Fig.7:: eine perspektivische Darstellung eines Profilstabverbindungssystems mit vier angeschlossenen Profilstäben.

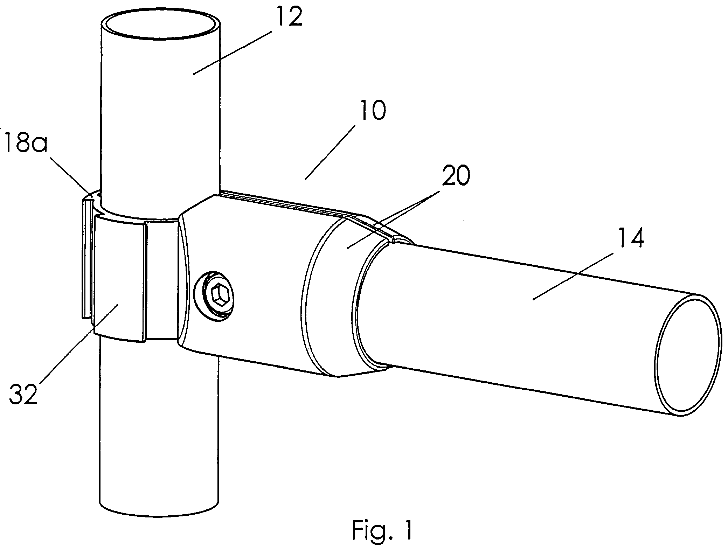

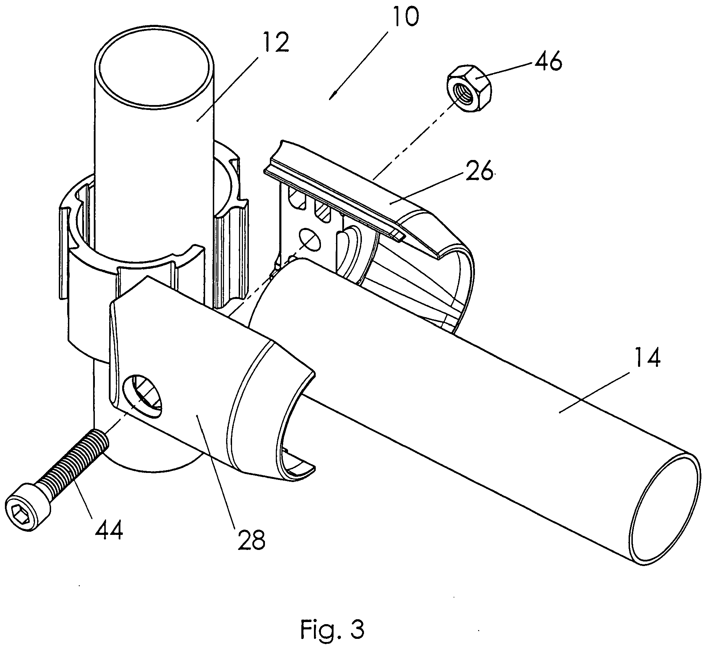

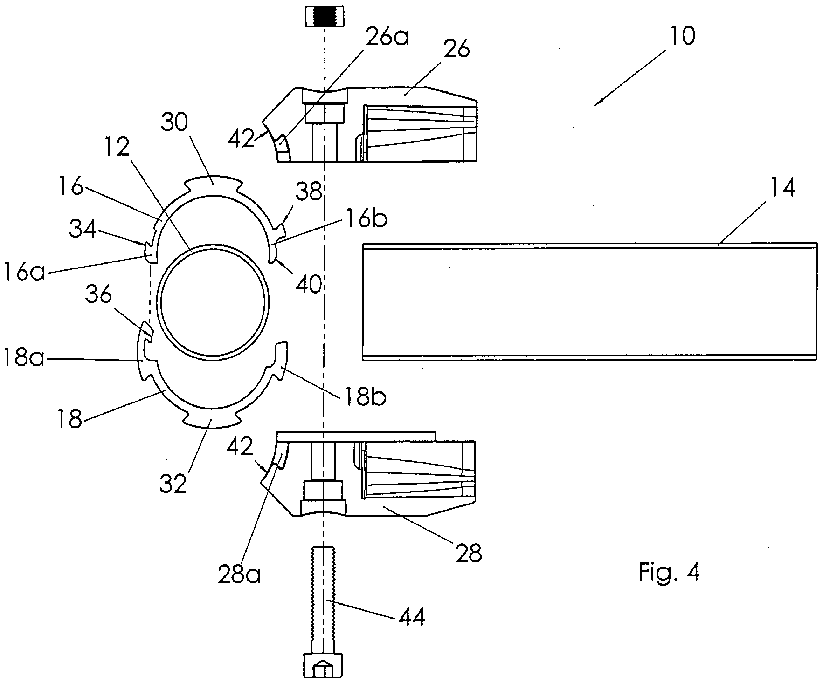

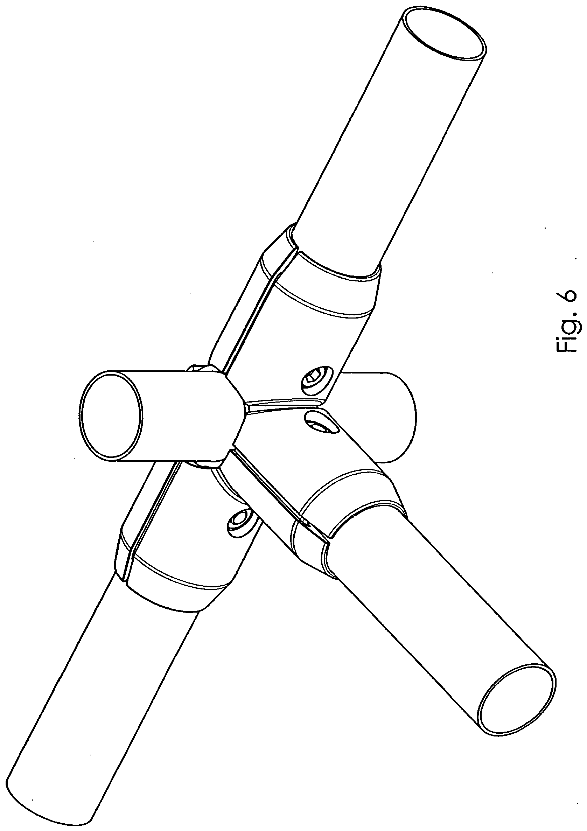

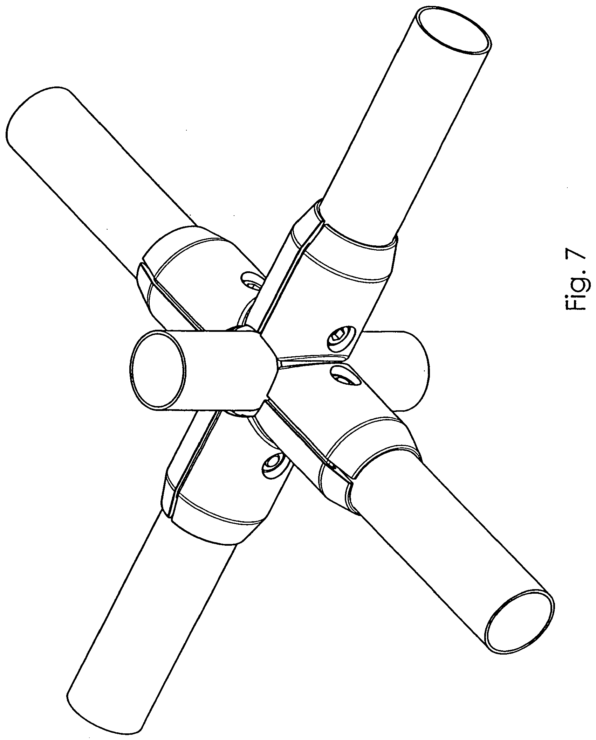

Anhand der Figuren 1 bis 7 werden nunmehr mehrere Ausführungsbeispiele eines Profilstabverbindungssystems 10 beschrieben. Dabei ist zu bemerken, dass gleiche Bezugszeichen auch gleiche, zumindest ähnliche Merkmale bedeuten, sofern nichts anderes ausgesagt ist.

Alle sieben Figuren zeigen Profilstabverbindungssysteme 10 zum Verbinden mindestens zweier in etwa senkrecht zueinander verlaufender erster und zweiter Profilstäbe 12 und 14.

Diese Profilstabverbindungssysteme 10 bestehen aus ersten und zweiten Halbschellen 16 und 18, die an ihren ersten Enden 16a und 18a sowie an ihren zweiten Enden 16b und 18b miteinander verbindbar sind.

Dabei besteht die Verbindung bei den ersten beiden Enden 16a und 18a aus einer formschlüssigen Verbindung. Demgegenüber werden die zweiten Enden 16b und 18b der beiden Halbschellen 16 und 18 mittels einer Klemmvorrichtung 20 zusammengehalten und somit auch miteinander verbunden.

Ein noch besserer Halt ist dann gewährleistet, wenn die zweiten Enden 16b und 18b im zusammengefügten Zustand eine erste hinterschnittene Ausformung 22 bilden.

Es ist zwar nicht zwingend vorgeschrieben, aber von Vorteil, wenn die ersten Enden 16a und 18a in zusammengefügtem Zustand ebenfalls eine in diesem Fall zweite hinterschnittene Ausformung 24 bilden. So kann die zweite Ausformung 24 ebenfalls von einer Klemmvorrichtung 20 erfasst werden und einen weiteren Profilstab 14 anschließen.

Bei allen gezeigten Ausführungsbeispielen besteht die Klemmvorrichtung 20 aus ersten und zweiten Halbschalen 26 und 28. Diese beiden Halbschalen 26 und 28 enthalten an ihren Stirnbereichen, die zur ersten Ausführung 22 weisen, entsprechende erste und zweite Aufnahmen 26a und 28a, um die in etwa zusammengefügten zweiten Enden 16b und 18b in diesem gezeigten Falle form- und kraftschlüssig ergreifen und zusammenzufügen.

Damit auch drei oder vier zweite Profilstäbe 14 gleichzeitig angeschlossen werden können, weisen die zusammengefügten ersten und zweiten Halbschellen 16 und 18 dritte und vierte hinterschnittene Ausformungen 30 und 32 auf. Dabei ist es aus Platzgründen vorteilhaft, wenn alle vier Ausformungen 22,24,30,32 in regelmäßigen Abständen auf der Schellenoberfläche, die nach außen weist, angeordnet sind.

Nun werden die Besonderheiten beschrieben, mit denen die ersten und zweiten Enden 16a, 18a, 16b und 18b ausgestaltet sind, um die gewünschte Befestigungswirkung zu erzielen.

Dazu weist das erste Ende 16a der ersten Halbschelle 16 einen ersten Vorsprung 34 auf, der in Richtung der ersten Halbschelle 16 eine Hinterschneidung hat. Dieser Vorsprung 34 greift in eine im ersten Ende 18a der zweiten Halbschelle 18 entsprechende Ausnehmung 36 formschlüssig ein.

Wie oben bereits schon kurz erwähnt, ist das zweite Ende 16b der ersten Halbschelle 16 mit einem zweiten hinterschnittenen Vorsprung 38 versehen. Dabei weist auch die Hinterschneidung in Richtung der ersten Halbschelle 16.

Des Weiteren weist das zweite Ende 16b der ersten Halbschelle 16 eine Zunge 40 auf, die ausgehend von dem zweiten hinterschnittenen Vorsprung 38 in Richtung des zweiten Endes 18b der zweiten Halbschelle 18 verlaufend übergeht. Diese Zunge 40 untergreift das zweite Ende 18b der zweiten Halbschelle 18.

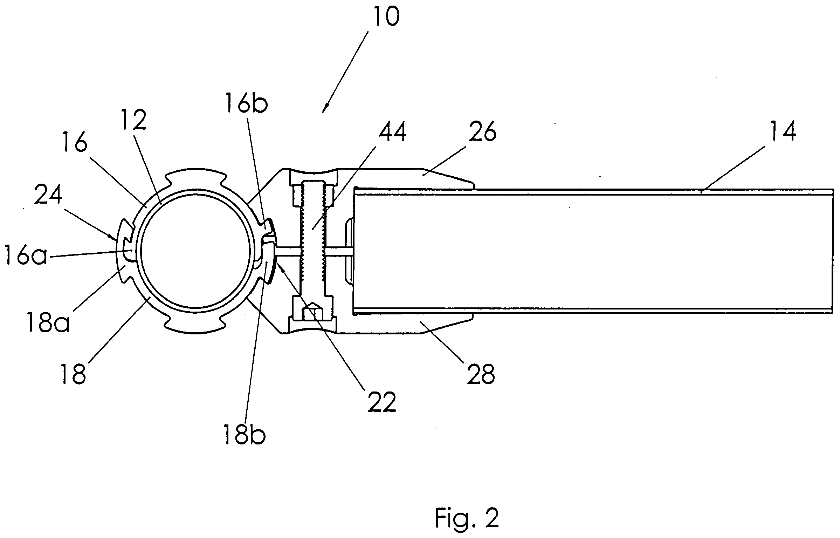

Wie insbesondere aus Fig.2 entnehmbar, sind die zweiten Ende 16b und 18b der ersten und zweiten Halbschellen 16 und 18 noch nicht vollständig zusammengefügt. Diese dadurch entstehenden Lücken dienen dann der Klemmvorrichtung 20 dazu, diese erste hinterschittene Ausformung 22 in diesem Falle mittels einer Schraube 44 soweit zusammen zu drücken, bis die erforderliche Kraft vorhanden ist. Selbstverständlich sollte dann noch eine sehr kleine Lücke zwischen den beiden Enden 16b und 18b vorhanden sein, um eventuelle Toleranzen der Außendurchmesser der ersten Profilstäbe 12 ausgleichen zu können.

Wie sich aus den Figuren ergibt, sind die beiden Halbschalen 26 und 28 der Klemmvorrichtung 20 auch noch so ausgebildet, dass sie den zweiten Profilstab 14 klemmend, also kraftschlüssig halten.

Außerdem weisen die beiden Halbschalen 26 und 28 noch Anschläge für die Stirnfläche des zweiten Profilstabes 14 auf, damit er nicht in Eingriff mit der Schraube 44 gelangen kann.

Eine Besonderheit für eine einfache Montage besteht darin, dass die ersten und zweiten Halbschellen 16 und 18 jeweils einen Umschlingungswinkel aufweisen, der mehr als 180° beträgt. Dadurch können die beiden Halbschellen 16 und 18 schon selbstgreifend an die gewünschte Position des ersten Profilstabes 12 positioniert werden, ohne sie für eine weitere Befestigung des zweiten Profilstabes 14 festhalten zu müssen.

Obwohl in den Zeichnungen nicht dargestellt, gilt dieses selbstverständlich auch für eckige Profile, wobei dabei dann die Umschlingungslänge der ersten beiden Halbschellen 16 und 18 länger ist als der Außenumfang des eckigen Profilstabes.

Wenn die beiden Halbschellen 16 und 18 an der gewünschten Position befestigt worden sind, kann nun die Klemmvorrichtung 20, bei der die beiden Halbschalen 26 und 28 mittels der Schraube 44 und deren Mutter 46 gelöst sind, über die zweiten Enden 16b und 18b der ersten und zweiten Halbschellen 16 und 18 geschoben werden. Dabei ist die Öffnung der Eingriffsbereiche bei der Stirnseite 42 der Klemmvorrichtung 20 so weit geöffnet, dass entweder ein senkrechtes Überstülpen oder ein senkrecht zum ersten Profilstab 12 ein Herandrücken ermöglichen.

Ferner liegt die zum ersten Profilstab 12 weisende Stirnseite 42 der Klemmvorrichtung 20 im Anschluss an den Hinterschnitten der zweiten Enden 16b und 18b der beiden Halbschellen 16 und 18 an und kann somit die Hinterschnitte schließen, indem die Schraube 44 betätigt wird. Das Anliegen hat aber auch noch einen weiteren Vorteil, nämlich dass dort auch kein Schmutz eindringen kann.

Ferner ist bei dem gezeigten Ausführungsbeispiel die Stirnseite 42 der Klemmvorrichtung 20 noch so ausgebildet, dass mehrere Klemmvorrichtungen mit zweiten Profilstäben 14 angeschlossen werden können. In diesem Falle z.B. an die Ausnehmungen 24,30 oder auch noch 32.

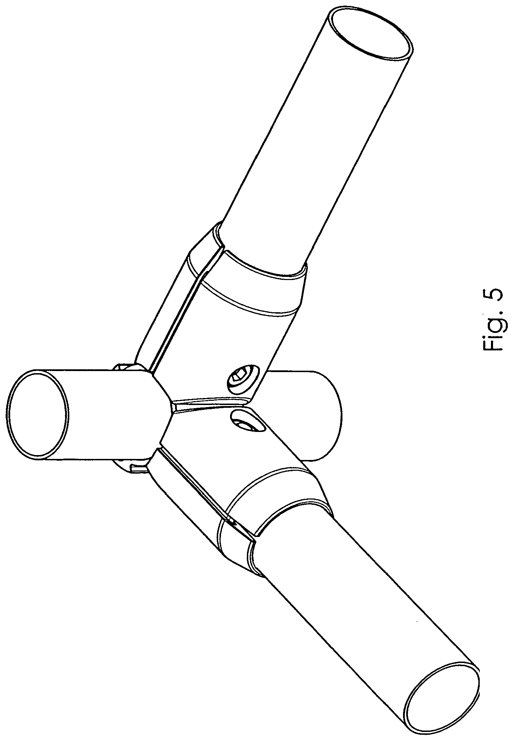

Diese eben beschriebenen Möglichkeiten der Anbringung von zwei, drei oder vier Klemmvorrichtungen 20 ist in den Figuren 5 bis 7 perspektivisch gezeigt.

Selbstverständlich gibt es eine Vielzahl von Möglichkeiten der Herstellung von diesen Halbschellen. Bevorzugt werden aber stranggepresste Profile, wie sie in der Beschreibung dargestellt worden sind.

Erfindungsgemäß ist es daher möglich, mit technisch einfachen Mitteln eine kraftschlüssige und auch formschlüssige Verbindung von mindestens zwei, meistens runden Profilstäben im rechten winkel zueinander herzustellen. Selbstverständlich ist dies auch bei genuteten Rundprofilen und auch bei eckigen Profilen möglich.

### Bezugszeichenliste:

- 10: Profilstabverbindungssystem
- 12: erster Profilstab
- 14.: zweiter Profilstab
- 16: erste Halbschelle
- 16a,b: erste/zweite Enden
- 18: zweite Halbschelle
- 18a,b: erste und zweite Enden
- 20: Klemmvorrichtung
- 22: erste hinterschnittene Ausformung
- 24: zweite hinterschnittene Ausformung
- 26: erste Halbschale
- 26a: erste Aufnahme
- 28: zweite Halbschale
- 28a: zweite Aufnahme
- 30: dritte hinterschnittene Ausformung
- 32: vierte hinterschnittene Ausformung
- 34: erster Vorsprung
- 36: Ausnehmung
- 38: zweiter Vorsprung
- 40: Zunge
- 42: Stirnseite
- 44: Schraube
- 46: Mutter

## Patentansprüche

1. Profilstabverbindungssystem (10) zum Verbinden mindestens zweier in etwa senkrecht zueinander verlaufender erster und zweiter Profilstäbe (12,14), mit ersten und zweiten Halbschelle (16,18), die an ihren ersten Enden (16a,18a) und zweiten Enden (16b, 18b) miteinander verbindbar sind, einer Klemmvorrichtung (20), die mit den ersten und zweiten Halbschellen (16,18), die um den ersten Profilstab (12) gelegt sind, verbindbar ist und den zweiten Profilstab (14) hält, wobei die ersten Enden (16a, 18a) formschlüssig und die zweiten Enden (16b,18b) mittels der Klemmvorrichtung (20) miteinander verbunden sind, **dadurch gekennzeichnet, dass** die zweiten Enden (16b,18b) im zusammengefügten Zustand eine erste hinterschnittene Ausformung (22) bilden.

2. Profilstabverbindungssystem (10) nach Anspruch 1, **dadurch gekennzeichnet, dass** die ersten Enden (16a, 18a) im zusammengefügten Zustand eine zweite hinterschnittene Ausformung (24) bilden.

3. Profilstabverbindungssystem (10) nach Anspruch 1 oder 2, **dadurch gekennzeichnet, dass** die Klemmvorrichtung (20) aus ersten und zweiten Halbschalen (26, 28) besteht und entsprechende Aufnahmen (26a,28a) zum kraftschlüssigen bzw. form- und kraftschlüssigen Ergreifen der zusammengefügten zweiten Enden (16b, 18b) aufweist.

4. Profilstabverbindungssystem (10) nach einem der Ansprüche 1 bis 3, **dadurch gekennzeichnet, dass** die zusammengefügten ersten und zweiten Halbschellen (16,18) dritte und vierte hinterschnittene Ausformungen (30,32) aufweisen, wobei alle vier Ausformungen (22,24,30,32) in regelmäßigen Abständen angeordnet sind.

5. Profilstabverbindungssystem (10) nach einem der Ansprüche 1 bis 4, **dadurch gekennzeichnet, dass** das erste Ende (16a) der ersten Halbschelle (16) ein erster Vorsprung (34) ist, der in Richtung der ersten Halbschelle (16) eine Hinterschneidung aufweist, und dass dieser Vorsprung (34) in eine im ersten Ende (18a) der zweiten Halbschelle (18) entsprechende Ausnehmungen (36) eingreift.

6. Profilstabverbindungssystem (10) nach einem der Ansprüche 1 bis 5, **dadurch gekennzeichnet, dass** das zweite Ende (16b) der ersten Halbschelle (16) einen zweiten hinterschnittenen Vorsprung (38) aufweist, der in eine in Richtung des zweiten Endes (18b) der zweiten Halbschelle (18) verlaufende Zunge (40) übergeht, die das zweite Ende (18b) der zweiten Halbschelle untergreift.

7. Profilstabverbindungssystem (10) nach einem der Ansprüche 1 bis 6, **dadurch gekennzeichnet, dass** die ersten und zweiten Halbschellen (16, 18) jeweils einen Umschlingungswinkel aufweisen, der größer als 180° ist.

8. Profilstabverbindungssystem (10) nach einem der Ansprüche 1 bis 6, **dadurch gekennzeichnet, dass** die ersten und zweiten Halbschellen (16,18) jeweils eine Umschlingungslänge aufweisen, die größer ist als der halbe Außenumfang eines eckigen Profilstabs.

9. Profilstabverbindungssystem (10) nach einem der Ansprüche 1 bis 8, **dadurch gekennzeichnet, dass** die zum ersten profiletab (12) weisende Stirnseite (42) der Klemmvorrichtung (20) im Anschluss an die Hinterschnitte der zweiten Enden (16b, 18b) der beiden Halbschellen (16,18) anliegen und somit die Hinterschnitte schließen.

10. Profilstabverbindungssystem (10) nach einem der Ansprüche 1 bis 9, **dadurch gekennzeichnet, dass** die Halbschellen (16,18) stranggepresste Profile sind.

## Claims

1. Profile bar connection system (10) for connecting at least two first and second profile bars (12, 14) extending approximately perpendicularly to each other, comprising first and second half clamps (16, 18) which can be connected to one another at their first ends (16a, 18a) and second ends (16b, 18b), a clamping apparatus (20) which can be connected to the first and second half clamps (16, 18) placed around the first profile bar (12) and holds the second profile bar (14), wherein the first ends (16a, 18a) are connected to one another in a form-fitting manner and the second ends (16b, 18b) are connected to one another by means of the clamping apparatus (20), **characterised in that** the second ends (16b, 18b) in the joined state form a first undercut projection (22).

2. Profile bar connection system (10) as claimed in claim 1, **characterised in that** the first ends (16a, 18a) in the joined state form a second undercut projection (24).

3. Profile bar connection system (10) as claimed in claim 1 or 2, **characterised in that** the clamping apparatus (20) consists of first and second half shells (26, 28) and has corresponding receptacles (26a, 28a) for engaging the joined second ends (16b, 18b) in a frictional manner or in a form-fitting and frictional manner.

4. Profile bar connection system (10) as claimed in any one of claims 1 to 3, **characterised in that** the joined first and second half clamps (16, 18) have third and fourth undercut projections (30, 32), wherein all four projections (22, 24, 30, 32) are arranged at regular spaced intervals.

5. Profile bar connection system (10) as claimed in any one of claims 1 to 4, **characterised in that** the first end (16a) of the first half clamp (16) is a first protrusion (34) which has an undercut in the direction of the first half clamp (16), and **in that** this protrusion (34) engages into a corresponding recess (36) in the first end (18a) of the second half clamp (18).

6. Profile bar connection system (10) as claimed in any one of claims 1 to 5, **characterised in that** the second end (16b) of the first half clamp (16) has a second undercut protrusion (38) which transitions into a tongue (40) which extends in the direction of the second end (18b) of the second half clamp (18) and engages underneath the second end (18b) of the second half clamp.

7. Profile bar connection system (10) as claimed in any one of claims 1 to 6, **characterised in that** the first and second half clamps (16, 18) each have a wrap angle which is greater than 180°.

8. Profile bar connection system (10) as claimed in any one of claims 1 to 6, **characterised in that** the first and second half clamps (16, 18) each have a wrap length which is greater than half the outer circumference of an angular profile bar.

9. Profile bar connection system (10) as claimed in any one of claims 1 to 8, **characterised in that** the end side (42) of the clamping apparatus (20) facing the first profile bar (12) are located adjacent to the undercuts of the second ends (16b, 18b) of the two half clamps (16, 18) and thus close the undercuts.

10. Profile bar connection system (10) as claimed in any one of claims 1 to 9, **characterised in that** the half clamps (16, 18) are extruded profiles.

## Revendications

1. Système de liaison de barres profilées (10) pour relier au moins deux première et deuxième barres profilées (12, 14) à peu près perpendiculaires l'une par rapport à l'autre, avec des premier et deuxième demi-colliers (16, 18) qui sont aptes à être reliés entre eux au niveau de leur première extrémité (16a, 18a) et de leur deuxième extrémité (16b, 18b), un dispositif de serrage (20) qui est apte à être relié aux premier et deuxième demi-colliers (16, 18) qui sont posés autour de la première barre profilée (12), et qui tient la deuxième barre profilée (14), les premières extrémités (16a, 18a) étant reliées entre elles par complémentarité de forme tandis que les deuxièmes extrémités (16b, 18b) sont reliées entre elles à l'aide du dispositif de serrage (20), **caractérisé en ce que** les deuxièmes extrémités (16b, 18b), à l'état assemblé, forment une première saillie contre-dépouillée (22).

2. Système de liaison de barres profilées (10) selon la revendication 1, **caractérisé en ce que** les premières extrémités (16a, 18a), à l'état assemblé, forment une deuxième saillie contre-dépouillée (24).

3. Système de liaison de barres profilées (10) selon la revendication 1 ou 2, **caractérisé en ce que** le dispositif de serrage (20) se compose de premier et deuxième demi-colliers (26, 28) et présente des logements correspondants (26a, 28a) pour accrocher par force ou par complémentarité de forme et par force les deuxièmes extrémités (16b, 18b) assemblées.

4. Système de liaison de barres profilées (10) selon l'une des revendications 1 à 3, **caractérisé en ce que** les premier et deuxième demi-colliers (16, 18) assemblés présentent des troisième et quatrième saillies contre-dépouillées (30, 32), les saillies (22, 24, 30, 32) étant toutes les quatre disposées à intervalles réguliers.

5. Système de liaison de barres profilées (10) selon l'une des revendications 1 à 4, **caractérisé en ce que** la première extrémité (16a) du premier demi-collier (16) est constituée par une première saillie (34) qui présente dans le sens du premier demi-collier (16) une contre-dépouille, et **en ce que** cette saillie (34) s'accroche dans un creux (36) correspondant, dans la première extrémité (18a) du deuxième demi-collier (18).

6. Système de liaison de barres profilées (10) selon l'une des revendications 1 à 5, **caractérisé en ce que** la deuxième extrémité (16b) du premier demi-collier (16) présente une deuxième saillie contre-dépouillée (38) qui se prolonge par une languette (40) qui s'étend dans le sens de la deuxième extrémité (18b) du deuxième demi-collier (18) et qui s'accroche sous ladite deuxième extrémité (18b) du deuxième demi-collier.

7. Système de liaison de barres profilées (10) selon l'une des revendications 1 à 6, **caractérisé en ce que** les premier et deuxième demi-colliers (16, 18) présentent chacun un angle d'enveloppement qui est supérieur à 180°.

8. Système de liaison de barres profilées (10) selon l'une des revendications 1 à 6, **caractérisé en ce que** les premier et deuxième demi-colliers (16, 18) présentent chacun une longueur d'enveloppement qui est supérieure à la moitié du périmètre extérieur d'une barre profilée polygonale.

9. Système de liaison de barres profilées (10) selon l'une des revendications 1 à 8, **caractérisé en ce que** le côté frontal (42), dirigé vers la première barre profilée (12), du dispositif de serrage (20) est appliqué, une fois raccordé, contre les contre-dépouilles des deux demi-colliers (16, 18) et ferme ainsi les contre-dépouilles.

10. Système de liaison de barres profilées (10) selon l'une des revendications 1 à 9, **caractérisé en ce que** les demi-colliers (16, 18) sont constitués par des profilés fabriqués par extrusion.
